Europäisches Patentamt

European Patent Office

Office européen des brevets

(19)

(11) Veröffentlichungsnummer : **0 146 911**
**B1**

(12) **EUROPÄISCHE PATENTSCHRIFT**

(45) Veröffentlichungstag der Patentschrift :
17.05.89

(21) Anmeldenummer : 84115697.9

(22) Anmeldetag : 18.12.84

(51) Int. Cl.⁴ : **C 08 B 37/14**, C 08 L 5/14//
D06P1/48 ,(C08L5/14, 5:00)

(54) Neue Derivate von Cassia tora Polysacchariden und ihre Verwendung.

(30) Priorität : 29.12.83 DE 3347469
28.08.84 DE 3431589

(43) Veröffentlichungstag der Anmeldung :
03.07.85 Patentblatt 85/27

(45) Bekanntmachung des Hinweises auf die Patenterteilung : 17.05.89 Patentblatt 89/20

(84) Benannte Vertragsstaaten :
AT BE CH DE FR GB IT LI LU NL SE

(56) Entgegenhaltungen :
EP--A-- 0 040 335
FR--A-- 2 156 173
JOURNAL OF AGRICULTURAL AND FOOD CHEMIS-
TRY, Band 21, Nr. 2, 1973, Seiten 222-226; S.C.
VARSHNEY et al.: "Structure of a polysaccharide
from Cassia tora seeds. I"

(73) Patentinhaber : Diamalt Aktiengesellschaft
Friedrichstrasse 18
D-8000 München (DE)

(72) Erfinder : Bayerlein, Friedrich Dr. rer. nat. Dipl.-Chem
Schwalbenweg 7
D-8033 Krailling (DE)
Erfinder : Keramaris, Nikolaos Dr. rer. nat. Dipl.-
Chem.
Amselweg 2
D-8031 Eichenau (DE)
Erfinder : Beck, Ulrich, Ing.
Eduard-Schwartz-Strasse 13
D-8000 München 50 (DE)
Erfinder : Kottmair, Nikolaus Dr. rer. nat. Dipl.-Chem.
Elisabethstrasse 5
D-8035 Gauting (DE)
Erfinder : Maton, Michel M.
39 Avenue Clarisse
F-92420 Vaucresson (FR)
Erfinder : Kuhn, Manfred Dr. rer. nat. Dipl.-Chem
Hornstrasse 22
D-8000 München 40 (DE)

(74) Vertreter : Lederer, Franz, Dr. et al
Van der Werth, Lederer & Riederer Patentanwälte
Lucile-Grahn-Strasse 22
D-8000 München 80 (DE)

## Beschreibung

Unter dem Begriff Polygalaktomannane bzw. Galaktomannane versteht man alle Polysaccharide, die Mannose- und Galaktoseeinheiten enthalten und darüberhinaus in untergeordnetem Maße auch weitere Zuckerbausteine aufweisen.

Polygalaktomannane finden sich hauptsächlich in den Endospermabschnitten von Samen verschiedener Leguminosen wie Guar, Johannisbrot, Cassia occidentalis, Tara, Flammenbaum u. a. Sowohl die oben erwähnten reinen Polygalaktomannane wie auch viele deren Derivate sind bekannt. In den US-PS'en 2.477.544 und 2.496.670 werden Carboxyalkyläther bzw. Polyhydroxyalkyläther von solchen Polygalaktomannanen beschrieben, die aus Guargummi, Johannisbrotkernmehlen, honey locust, flame tree und dergleichen stammen.

Die US-PS 3.467.647 beschreibt Polysaccharide, die sowohl kationische wie auch anionische Substituenten enthalten. Als Polysaccharide werden Stärke, Johannisbrotkernmehl und Guar und als anionische Substituenten unter anderem auch Phosphatester erwähnt.

Die US-PS 4.031.306 beschreibt die Herstellung von Polygalaktomannanalkyläthern. In der US-PS 4.169.945 wird ein Verfahren zur Herstellung von Polygalaktomannanalkyläthern beschrieben, wobei das Polygalaktomannan Guar oder Johannisbrotkernmehl sein kann.

Die US-PS 4.162.925 beschreibt Phosphatester von Johannisbrotgum mit einem Substitutionsgrad von 0.03 bis 0.5. Das europäische Patent 0.030.443 beschreibt die Phosphatierung von Guar mit einem Substitutionsgrad von 0.1 bis 0.5 und die Viskosität von 50 bis 4 000 milli-Pascal-Sekunden einer 2 %igen wässrigen Lösung sowie die Verwendung des Guarphosphatesters in der Papierindustrie.

Cassia tora Polygalactomannan und alkylierte Derivate davon werden in J. Agric. Food Chem. 21 (1973), 222-226 beschrieben, wo deren Wert als Nahrungsmittel untersucht wurde. In der EP-A2-40 335 wird die Verwendung eines hydroxyalkylierten Polysaccarids aus dem Samen von Cassia Occidentalis als Schlichtemittel beschrieben.

Es wurde nun festgestellt, daß die substituierten Alkyläther und die Phosphatester von in den Endospermabschnitten von Cassia tora vorkommenden Polysacchariden sich überraschenderweise durch von den entsprechenden Abkömmlingen von Polysacchariden anderer Provenienz abweichende Eigenschaften auszeichnen und beispielsweise vorteilhafte Verwendung als Verdickungsmittel mit verbesserter Hitze-, Säure- sowie Scheuerstabilität finden können. Solche Verdickungsmittel werden beispielsweise in der Papierindustrie als Massenzusätze, in den Bohrspülflüssigkeiten als viskositätssteigernde Additive sowie in Druckpasten für den Textildruck eingesetzt.

Die Cassia tora (L. Baker), auch als Cassia obtusifolia (Linn) bezeichnet, stellt eine Cassia-Art dar, die bevorzugt in tropischem Klima gedeiht. Die Polysaccharide, die in den Endospermabschnitten von Cassia tora vorkommen, sind insbesondere aus Galaktose- und Mannoseeinheiten und nur in untergeordnetem Maße aus anderen Zuckerbausteinen aufgebaut. Sie sind insbesondere Polygalaktomannane.

Die reinen Galaktomannane verschiedener botanischer Herkunft weisen hinsichtlich ihrer chemischen Struktur und Zusammensetzung leichte Unterschiede auf, die einen Einfluß auf Kaltwasserlöslichkeit, Dickungseigenschaften und Interaktionen mit anderen Polysacchariden (Carrageenan, Xanthan) ausüben. Die bekanntesten Polygalaktomannane sind Cyamopsis tetragonoloba L. (Guar), Cesalpinia spinosa L. (Tara) und Ceratonia siliqua L. (Johannisbrot), deren Molekulargewicht ca. 200 000 bis 300 000 beträgt. Die Hauptkette ist aus durch β-1,4-glukosidische Bindungen verknüpften Mannosemolekülen aufgebaut. Unsubstituierte Polymannane sind völlig wasserunlöslich. Die Anknüpfung der Galaktosebausteine an den primären Hydroxylgruppen der Mannosebausteine (C-Atom 6 des Mannosemoleküls) durch α-1,6-glukosidische Bindungen vermehrt die Wasser-, insbesondere die Kaltwasserlöslichkeit.

Je größer die Substitution der Mannose-Hauptkette mit Galaktosemolekülen ist, desto größer ist auch die Kaltwasserlöslichkeit des Polygalaktomannans.

Johannisbrotkernmehl (kurz JBK genannt), welches bislang vorzugsweise als Rohstoff für die Produkte zur Textilveredlung eingesetzt wurde, wird aus den Johannisbrotkernen gewonnen. Johannisbrotbäume gedeihen vorwiegend im Mittelmeerraum, Kalifornien und Australien und erbringen erst nach 10-15 Wachstumsjahren volle Ernteerträge. Deshalb stehen JBK-Mehle dem Verbraucher nur in begrenztem Umfang zur Verfügung und dies läßt die Suche nach einer Alternative zweckmäßig erscheinen.

Bei den erfindungsgemäßen substituierten Alkyläthern handelt es sich insbesondere um solche, die 1-4 Kohlenstoffatome in der Alkylgruppe besitzen und als Substituenten Hydroxyl-, Carboxyl- und Trialkylammoniumgruppen tragen. Beispiele von erfindungsgemäßen Verbindungen sind Hydroxypropyl-cassia-galaktomannan, Hydroxyäthylcassia-galaktomannan und Carboxymethylcassia-galaktomannan. Ein besonders bevorzugter Äther ist der Hydroxypropyläther.

Diese erfindungsgemäßen Verbindungen können dadurch hergestellt werden, daß man Cassia tora-Galaktomannan mit Alkylenoxiden, Acrylnitril, Halogenfettsäurederivaten oder eine Epoxyalkyl- oder Halogenhydringruppe enthaltenden quaternären Ammoniumverbindungen in an sich bekannter Weise umsetzt.

So führt die Umsetzung des aus den Endospermabschnitten von Cassia tora stammenden Polygalaktomannans mit Alkyenoxiden zu Hydroxyalkyläthern. Bevorzugte Alkylenoxide sind Äthylenoxid und

EP 0 146 911 B1

Propylenoxid. Bei diesen Reaktionen entstehen nichtionische Verbindungen.

Die Reaktion des Cassia tora-Galaktomannans mit quaternären Ammoniumverbindungen, die eine Epoxyalkyl- oder Halogenhydringruppe enthalten, führt zu kationischen Derivaten. Bevorzugte quaternäre Verbindungen sind Glycidyltrialkylammoniumhalogenide oder 3-Halogen-2-Hydroxypropyltrialkylammoniumhalogenide. Die besonders bevorzugten mit Di- oder Trialkylammonium substituierten Hydroxyalkyläther sind die Di- und Trimethylammoniumhydroxyalkyläther.

Die Reaktion des Cassia tora-Galaktomannans mit Halogenfettsäuren bzw. deren Salzen und Acrylsäurederivaten führt zu anionisch substituierten Alkylgalaktomannanen. Bevorzugtes anionisches Derivat ist Carboxymethylgalaktomannan, das durch Umsetzung von Cassia tora-Galaktomannan mit dem Na-Salz der Monochloressigsäure hergestellt werden kann.

Das erfindungsgemäße phosphatierte Cassia tora-Galaktomannan ist der Ester der Phosphorsäure und des aus den Endospermabschnitten der Cassia tora gewonnenen Polygalaktomannans. Zur Veresterung des Polygalaktomannans wird die Phosphorsäure oder/und das Alkali- bzw. Ammoniumsalz davon verwendet. Aus allen Indikationen geht hervor, daß der entstandene Ester der Monoester der Phosphorsäure ist.

Die Phosphatierungsreaktion kann nach mehreren Wegen durchgeführt werden. Das Cassia tora-Polygalaktomannan kann zuerst mit der wässrigen Lösung des Alkalihydroxids und danach mit der Phosphorsäure gemischt werden. Das Cassia tora-Polygalaktomannan kann auch zuerst mit der Phosphorsäure und danach mit der wässrigen Lösung des Alkalihydroxids gemischt werden. Aus der Phosphorsäure und dem Alkalihydroxid kann auch zuerst das Alkalisalz der Phosphorsäure hergestellt und danach mit Cassia tora-Polygalaktomannan gemischt werden. Aus Mononatriumphosphat und Dinatriumphosphat kann zuerst die Mischung im Molverhältnis 1 : 1 hergestellt und danach die wässrige Lösung davon mit einem pH-Wert von ca. 6 mit Cassia tora-Polygalaktomannan gemischt werden. Cassia tora-Polygalaktomannan kann in Form von Pulver oder Splits eingesetzt werden. Die Phosphatierungsreaktion wird bei 115 bis 175 °C vorzugsweise bei ca. 150 °C innerhalb von 30 Minuten bis 5 Stunden durchgeführt.

Wenn das Natriumhydroxid und die Phosphorsäure nacheinander mit dem Polygalaktomannan von Cassia tora gemischt werden, so werden zweckmäßigerweise für die Umsetzung von 162 Gewichtsteilen Polygalaktomannan 10 bis 65 Gewichtsteile Natriumhydroxid, 15 bis 100 Gewichtsteile Phosphorsäure und 50 bis 300 Gewichtsteile Wasser in solchem Verhältnis gemischt, daß der pH-Wert zwischen 6 und 7 liegt. Vorzugsweise werden die Reagenzien im Verhältnis von 27.5 Gewichtsteilen Natriumhydroxid zu 45.5 Gewichtsteilen Phosphorsäure sowie 200 Gewichtsteilen Wasser für die Umsetzung von 162 Gewichtsteilen Cassia tora-Polygalaktomannan eingesetzt.

Der Substitutionsgrad der erfindungsgemäßen Äther und Ester, insbesondere der Alkyläther, liegt zwischen 0.03 und ca. 3.0, vorzugsweise zwischen 0.1 und 0.5 ; die Viskosität (3 Gewichtsprozent in Wasser) beträgt ca. 100 bis 40.000 mPas (Brookfield RVT, bei 20 UpM und 20 °C). Für die erfindungsgemäßen Phosphorsäureester werden ein Substitutionsgrad von 0.03 bis 1.5, insbesondere von 0.1 bis 0.5, und eine Viskosität von 100 bis 10.000 mPas bevorzugt.

Die erfindungsgemäßen Galaktomannanderivate können als Textilhilfsmittel verwendet werden.

Die erfindungsgemäßen Galaktomannanderivate können auch in depolymerisierter Form als Verdickungsmittel eingesetzt werden. Die Molekulargewichte und Viskositäten können durch hydrolytische oder oxidative Depolymerisation herabgesetzt werden.

Es ist bekannt, zum Drucken und Färben textiler Substrate die Farbstofflösungen oder Dispersionen mittels natürlicher Polysaccharide bzw. deren Abkömmlingen anzudicken. Solche in der Textilveredlung angewendeten natürlichen Polysaccharide oder Derivate hiervon werden z. B. aus Stärken, Alginaten, Kristall- oder Pflanzengummen und Galaktomannanen gewonnen. Nichtmodifizierte Galaktomannane sind sowohl kaltwasserlöslich, wie z. B. die Guarmehle, als auch nicht oder nur teilweise löslich in kaltem Wasser, wie z. B. Johannisbrotkernmehl. Eine Kaltwasserlöslichkeit oder verbesserte Kaltwasserlöslichkeit kann durch chemische Derivatisierung oder in einigen Fällen durch mechanischen oder thermischen Aufschluß erreicht werden.

Aus der Reihe der Galaktomannane werden gemäß US-PS-2.477.544 für das Verdicken von wässrigen Farbsystemen insbesondere Johannisbrotkernmehle und Johannisbrotkernmehläther, im folgenden JBK bzw. JBK-Äther genannt, empfohlen.

Der Vorteil von JBK bzw. JBK-Äthern liegt in einer ausgezeichneten Penetration der Druckpasten, einem sehr guten Egalisierungsvermögen, Brillanten Farbausfällen, sehr guter Filmbildung und guter Auswaschbarkeit aus dem textilen Substrat. Außerdem wird durch Verwendung von JBK-Mehl bzw. JBK-Mehl-Äthern die maschinentechnische Verarbeitbarkeit der Druckpasten positiv beeinflusst. Besonders deutlich zeigt sich dies in einer leichteren Übertragbarkeit der Farbpasten aus den Hachuren der Tiefdruckwalzen auf das Substrat und einer geringeren Verquetschempfindlichkeit. Diese guten Eigenschaften werden von den anderen, bisher in den Textilveredlung verarbeiteten Galaktomannanen bzw. deren Derivaten, nicht oder nur teilweise erreicht.

Es wurde nun überraschenderweise gefunden, daß die erfindungsgemäßen Alkyläther und Phosphatester der in den Endospermabschnitten von Cassia tora vorkommenden Polygalaktomannane die beschriebenen Vorteile der JBK-Mehle bzw. JBK-Äther aufweisen und sogar noch übertreffen, aber deren Nachteile nicht besitzen.

3

Sie eignen sich hervorragend als Verdickungsmittel allgemein und insbesondere als Druckverdickungsmittel für den Textil- und Papierdruck.

Nichtmodifizierte Galaktomannane sind sowohl kaltwasserlöslich, wie z. B. die Guarmehle, als auch nicht oder nur teilweise löslich in kaltem Wasser, wie z. B. Johannisbrotkernmehl. Eine Kaltwasserlöslichkeit oder verbesserte Kaltwasserlöslichkeit kann durch chemische Derivatisierung oder in einigen Fällen durch mechanischen oder thermischen Aufschluß erreicht werden. Während das Cassia tora Polygalaktomannan nur gering kalt- und warmwasserlöslich ist, sind die Alkyläther und die Phosphatester gut kalt- und warmwasserlöslich.

Außerdem können sie als Bohrspülhilfsmittel und im Bergbau Verwendung finden sowie in der Sprengstoffindustrie.

Da die erfindungsgemäßen Cassia-Alkyläther thermostabil sind, können sie insbesondere in der Erdölgewinnung und Erdbohrung Verwendung finden. Die Viskosität der erfindungsgemäßen Cassia-Derivate bleibt bei der Lagerung im verschlossenen Autoklaven sowohl im neutralen wie auch im stark alkalischen Bereich und bei einer Temperatur über 120 °C mehrere Stunden stabil.

Die erfindungsgemäßen Derivate der aus dem Endosperm von Cassia tora stammenden Galaktomannane können für sich alleine, teilweise in Kombination untereinander oder zusammen mit anderen Polysaccharidabkömmlingen verwendet werden. Solche andere Polysaccharidabkömmlinge sind z. B. Guargummi, depolymerisierter Guargummi, Carboxymethylstärke, British Gum, Natriumalginat, Xanthangum, Carboxymethylguar.

Beispiele für geeignete Kombination sind :

1) 1-100 Gewichtsteile Hydroxypropylcassia
   99- 0 Gewichtsteile Guargummi
2) 10- 60 Gewichtsteile Methyl-Cassia
   10- 30 Gewichtsteile Hydroxypropyl-Cassia
   80- 20 Gewichtsteile Carboxymethylguar
3) 20- 60 Gewichtsteile Allyl-Cassia
   10- 30 Gewichtsteile Hydroxypropyl-Cassia
   70- 10 Gewichtsteile Carboxymethylstärke
4) 5-100 Gewichtsteile Hydroxyäthylcassia
   95- 0 Gewichtsteile depolymerisierter Guargummi
5) 20- 80 Gewichtsteile Hydroxypropylcassia
   80- 20 Gewichtsteile Carboxymethylstärke
6) 20- 60 Gewichtsteile Hydroxyäthylcassia
   10- 30 Gewichtsteile Natriumalginat
   70- 10 Gewichtsteile Carboxymethylstärke
7) 30-100 Gewichtsteile Hydroxypropylcassia
   70- 0 Gewichtsteile Xanthangum
8) 10- 60 Gewichtsteile Trimethylammoniumhydroxypropylcassiachlorid
   90- 40 Gewichtsteile British Gum
9) 10- 60 Gewichtsteile Carboxymethylcassia
   10- 30 Gewichtsteile Carboxymethylguar
   80- 20 Gewichtsteile Carboxymethylstärke

Bei der Verwendung der beschriebenen Cassia tora-Derivate im wässrigen Textildruck und für das Kontinuefärben textiler Flächengebilde aus cellulosischen, animalischen und synthetischen Materialien bzw. deren Mischungen können vorzugsweise Baumwolle, Zellwolle, Wolle, Seide, Acetat, Triacetat, Polyester, Polyamid und Polyacrylnitril, bearbeitet werden.

In einem weiteren Aspekt der vorliegenden Erfindung wurde gefunden, daß die vorstehend beschriebenen Alkyläther und Phosphatester von Cassia tora, wie auch andere Cassia tora Derivate mit anderen als Verdickungsmitteln geeigneten Stoffen wie Carrageenan, Agar, Xanthan, Polyacrylaten und Polymethacrylaten, insbesondere mit Xanthan, einen synergistischen Effekt liefern.

Nicht alle Cassia tora Derivate liefern diesen synergistischen Effekt, beispielsweise sind kationische Derivate nicht geeignet.

Es wurde gefunden, daß mit zunehmendem Substitutionsgrad der Cassia tora-Äther und -Ester die Wasserlöslichkeit dieser Derivate zwar zunimmt, der Synergismus jedoch abnimmt ; bei Totalsubstitution ist kein Synergismus mehr vorhanden.

Geeignete Cassia tora-Derivate, die diesen Synergismus zeigen, sind Carboxyalkyläther, Hydroxyalkyläther, und zwar insbesondere jeweils solche, in denen die Alkylgruppe 1-4 C-Atome aufweist, sowie die genannten Phosphatester.

Unter Xanthan versteht man ein hochmolekulares Polysaccharid, gewonnen in einem Fermentationsprozess durch die Mikroorganismen Xanthomonas mulracean, Xanthomonas campestris, Xanthomonas phaseoli, Xanthomonas carotae u.a. (siehe US-PS 3.557.016 und 4.038.206).

Carrageenan ist ein aus Rotalgen (Rhodophyceae) extrahiertes Galaktan, das teilweise Anhydrogalaktose enthält und teilweise mit Schwefelsäure verestert ist.

Die US-PS 4.246.037 beschreibt die synergistische Viskositätserhöhung von Mischungen aus Xanthangum und Tamarindenmehl (Mehl aus Tamarindus indica).

Die US-PS 3.557.016 beschreibt, daß eine Erhöhung der Viskosität stattfindet, wenn man die Mischung von Johannisbrotkernmehl (90-50 %) und Xanthan (10-50 %) in heißes Wasser (66-82 °C) gibt und über 15 Minuten bei dieser Temperatur stehen lässt. In U.S. Food Chemical Codex II p 856 wird beschrieben, daß diese Quervernetzung (Synergismus) als Johannisbrotkernmehlnachweis verwendet wird.

Die US-PS 4.162.925 beschreibt die synergistische Viskositätserhöhung von Mischungen aus Xanthangum und Phosphatester von Johannisbrotgum mit einem Substitutionsgrad von 0.03 bis 0.5.

Es wurde nun gefunden, daß sowohl die kaltwasserlöslichen Cassia tora-Galaktomannanäther wie auch die kaltwasserlöslichen Cassia tora-Galaktomannanester synergistisches Verhalten mit Xanthangum, Carrageenan und anderen Stoffen zeigen. Bei der Verwendung von Carrageenan als Mischkomponente findet erst nach dem Erhitzen der Mischung im Wasser von mindestens 15 Minuten die Erhöhung der Viskosität durch Synergismus statt.

Bei der Verwendung von Xanthangum als Mischkomponente wird ein Erhitzen bzw. Kochung des wässrigen Ansatzes nicht mehr benötigt.

Das Mischungsverhältnis von Cassia tora-Galaktomannanäther bzw. -ester zu der synergistischen Komponente wie z. B. Xanthangum kann stark variiert werden. Die erfindungsgemäßen synergistischen Mischungen bestehen aus 10 bis 90 Gewichtsprozent Cassia tora-Galaktomannanäther bzw. -ester und entsprechend 90 bis 10 sich zu 100 Prozent ergänzenden Anteilen von Xanthangum. Das Maximum an Viskositätserhöhung wird jedoch bei Mischungen aus 75 bis 50 Gewichtsteilen Cassia tora-Galaktomannanäther bzw. -ester und entsprechend 25 bis 50 sich zu 100 Prozent ergänzenden Gewichtsteilen von Xanthangum erreicht.

Durch einfaches kurzes Einrühren der Mischung in kaltes Wasser (ohne Erhitzen und ohne starke Scherkräfte) findet die Hydratation bereits innerhalb 5 Minuten statt. Die vollkommene Hydratation wird nach ca. 15 Minuten erreicht.

Die erfindungsgemäß erhaltenen Gele werden dadurch hergestellt, daß 0.3 bis 2 Gewichtsprozent der Mischung aus Cassia tora-Galaktomannanäther bzw. -ester und Xanthan mit kaltem Wasser kurz gerührt werden. Die Viskosität bzw. die Festigkeit der Gele steigt mit steigender Konzentration an. Flußfähige Gele werden bei einer Konzentration von 0.3 bis 0.7 Prozent (in Wasser bezogen auf Trockensubstanz) hergestellt. Bei einer Konzentration über 1 Prozent sind die Gele nicht mehr fließfähig, sondern mehr oder weniger fest. Die Mischungen aus Cassia- Galaktomannanäther bzw. -ester und Xanthan können auch andere kaltwasserlösliche Verdickungsmittel (wie Guar und Guarderivate, JBK-Derivate, Tara und Taraderivate, Cellulose- und Stärkederivate und Tamarindenderivate) enthalten.

Die erfindungsgemäßen Gele können in der Erdbohrung und Erdölgewinnung Verwendung finden. Die Viskosität der erfindungsgemäßen Gele bleibt bei der Lagerung im verschlossenen Autoklaven sowohl im neutralen wie auch im stark alkalischen Bereich und bei einer Temperatur über 120 °C mehrere Tage stabil. Außerdem können sie in der Textil-, Papier- sowie Sprengstoffindustrie Verwendung finden. Ganz allgemein können diese Gele wegen ihres besonderen Tragvermögens auch überall dort eingesetzt werden, wo es notwendig ist, feste Teile in wäßrigen bzw. wäßrigalkoholischen Flüssigkeiten in der Schwebe zu halten und am Sinken zu hindern.

In den folgenden Beispielen wird die Erfindung näher erläutert. Die in den Beispielen genannten Teile sind Gewichtsteile. Die Viskosität, wenn nicht anders beschrieben, wurde am Brookfield Rotationsviskosimeter RVT bei 20 °C und 20 UpM mit der geeigneten Spindel gemessen.

## Beispiel 1

### Hydroxypropylcassia-galaktomannan

162 Teile Polygalaktomannan aus Cassia tora wurden mit 58 Teilen Propylenoxid in einem alkalisch-wässrigen Medium bei einer Temperatur von 60 °C umgesetzt. Es wurde ein in kaltem Wasser löslicher, hellbrauner Feststoff erhalten.

Viskosität (3 %ig in Wasser, gemessen am Brookfield Rotationsviskosimeter RVT, Spindel 6, 20 °C und 20 UpM) etwa 20 000 mPas ; Mittleres Molekulargewicht : etwa 200 000 ; Substitutionsgrad : 0.65

## Beispiel 2

### Hydroxyethylcassia-galaktomannan

162 Teile Polygalaktomannan aus Cassia tora wurden mit 22 Teilen Ethylenoxid in einem alkalisch-wässrigen Medium bei einer Temperatur von 42 °C umgesetzt. Es wurde ein in kaltem Wasser löslicher, hellbrauner Feststoff erhalten.

Viskosität (3 %ig in Wasser, gemessen am Brookfield Rotationsviskosimeter RVT, Spindel 6, 20 °C und 20 UpM) etwa 40 000 mPas ; Mittleres Molekulargewicht : etwa 250 000 ; Substitutionsgrad : 0.31

Beispiel 3

Carboxymethylcassia-galaktomannan

162 Teile Polygalaktomannan aus Cassia tora wurden mit 35 Teilen des Natriumsalzes der Monochloressigsäure und 15 Teilen Natriumhydroxid im wässrigen Medium bei einer Temperatur von 68 °C umgesetzt. Es wurde ein in kaltem Wasser löslicher, hellbrauner Feststoff erhalten.

Viskosität (3 %ig in Wasser, gemessen am Brookfield Rotationsviskosimeter RVT, Spindel 6, 20 °C und 20 UpM) etwa 15 000 mPas ; Mittleres Molekulargewicht : etwa 180 000 ; Substitutionsgrad : 0.23

Beispiel 4

2-Hydroxy-3-(trimethylamonnium) propyl-Cassia tora-Galaktomannan-Chlorid

200 Teile Polygalaktomannan aus Cassia tora wurden mit 68 Teilen Glycidyltrimethylammoniumchlorid (75%ige wässrige Lösung) in einem alkalisch-wässrigen Medium bei einer Temperatur von 52 °C umgesetzt. Es wurde ein in kaltem Wasser löslicher, hellbrauner Feststoff erhalten.

Viskosität (3 %ig in Wasser, gemessen am Brookfield Rotationsviskosimeter RVT, Spindel 6, 20 °C und 20 UpM) 18 000 mPas ; Mittleres Molekulargewicht : etwa 190 000 ; Substitutionsgrad : 0.18.

Beispiel 5

Hydroxypropylcassia-galaktomannan, depolymerisiert

162 Teile Polygalaktomannan aus Cassia tora wurden mit 25 Teilen Propylenoxid in einem alkalisch-wässrigen Medium bei einer Temperatur von 60 °C umgesetzt. Nach der Depolymerisation mit 20 Teilen Wasserstoffperoxid wurde ein in kaltem Wasser löslicher, hellbrauner Feststoff erhalten.

Viskosität (10 %ig in Wasser, gemessen am Brookfield Rotationsviskosimeter RVT, Spindel 6, 20 °C und 20 UpM) etwa 10 000 mPas ; Mittleres Molekulargewicht : etwa 18 000 ; Substitutionsgrad : 0.27.

Beispiel 6

200 Teile Polysaccharid aus Endospermen von Cassia tora werden in einem Knetmischer vorgelegt und unter laufendem Mischer mit einer Lösung von 34.07 Teilen Natriumhydroxid und 65.47 Teilen Phosphorsäure (85 %ig) in 240 Teilen Wasser versetzt. Nach 45-minütigem Kneten bei Raumtemperatur wird das Reaktionsgut 3 1/2 Stunden bei 158-160 °C geknetet. Nach Kühlung und Vermahlung erhält man ein kaltwasserlösliches Produkt, das stark anionisch ist. Mit mehrwertigen Kationen (oder kationaktiven Galaktomannanen) findet Ausfällung statt. Der Substitutionsgrad $DS_{PO_4^{3-}}$ beträgt 0.25.

| Reaktionszeit bei 158-160 °C | Viskosität mPas (3 %ig) |
|---|---|
| 1 Stunde | 600 |
| 1 1/2 Stunden | 5 350 |
| 2 Stunden | 3 900 |
| 2 1/2 Stunden | 1 950 |
| 3 1/2 Stunden | 380 |

Zum Vergleich wurde folgender Blindversuch durchgeführt : 200 Teile Polysaccahrid aus Endospermen von Cassia tora werden in einem Knetmischer vorgelegt und unter laufendem Mischer mit 240 Teilen Wasser versetzt. Nach 45-minütigem Kneten bei Raumtemperatur werden die stark gequollenen Splits 90 Minuten bei 158-160 °C erhitzt. Nach der Vermahlung zeigte das angesetzte bräunliche Pulver kaum Viskosität. Auch nach dem Kochen fand nur geringe Hydratation statt. Ein 3 %-iger Ansatz zeigte kalt keine Viskosität, nach dem Kochen eine Viskosität von 370 mPas.

Beispiel 7

400 Teile Polysaccharid aus Endospermen von Cassia tora werden in einem Knetmischer vorgelegt und unter laufendem Mischer mit einer Lösung von 68 Teilen Natriumhydroxid und 132 Teilen Phosphorsäure (85 %ig) in 480 Teilen Wasser versetzt. Das Reaktionsgut wurde 2 Stunden lang bei Raumtemperatur und anschließend 2 Stunden bei 60 °C gemischt. Nun wurde auf 158-160 °C erhitzt und 3 Stunden lang bei dieser Temperatur geknetet. Nach der Vermahlung erhält man ein bräunliches, kaltwasserlösliches Produkt mit einem Substitutionsgrad von 0.2.

| Reaktionszeit bei 158-160 °C nach | Viskosität mPas (3 %ig) |
|---|---|
| 90 Minuten | 440 |

| 120 Minuten | 3 450 |
| 150 Minuten | 3 750 |
| 180 Minuten | 1 300 |

## Beispiel 8

200 Teile Polysaccharid aus Endospermen von Cassia tora werden in einem Knetmischer vorgelegt und unter laufendem Mischer mit einer Lösung von 33 Teilen Phosphorsäure (85 %ig) in 100 Teilen Wasser versetzt und 30 Minuten lang bei Raumtemperatur gemischt. Nun wird die Lösung von 17 Teilen Natriumhydroxid in 80 Teilen Wasser zugegeben und weitere 15 Minuten gemischt.

Das Reaktionsgut wird 3.5 Stunden bei 158-160 °C geknetet. Nach der Vermahlung erhält man ein kaltwasserlösliches Produkt.

| Reaktionszeit bei 158-160 °C nach | Viskosität mPas (3 %ig) |
| 30 Minuten | 210 |
| 60 Minuten | 570 |
| 90 Minuten | 2 000 |
| 120 Minuten | 2 750 |
| 150 Minuten | 3 400 |
| 180 Minuten | 1 850 |
| 210 Minuten | 830 |

## Beispiel 9

200 Teile Polysaccharid aus Endospermen von Cassia tora werden in einem Knetmischer vorgelegt und unter laufendem Mischer mit einer Lösung von 66 Teilen Phosphorsäure (85 %ig) in 120 Teilen Wasser versetzt und 30 Minuten lang bei Raumtemperatur gemischt. Nun wird die Lösung von 34 Teilen Natriumhydroxid in 120 Teilen Wasser zugegeben und weitere 30 Minuten gemischt. Das Reaktionsgut wird 3 1/2 Stunden bei 158-160 °C geknetet. Nach der Vermahlung erhält man ein kaltwasserlösliches Produkt.

| Reaktionszeit bei 158-160 °C nach | Viskosität mPas (3 %ig) |
| 60 Minuten | 1 425 |
| 90 Minuten | 4 000 |
| 120 Minuten | 4 700 |
| 150 Minuten | 5 500 |
| 180 Minuten | 3 500 |
| 210 Minuten | 1 500 |

## Beispiel 10

200 Teile Polysaccharid aus Endospermen von Cassia tora werden in einem Knetmischer vorgelegt und unter laufendem Mischer mit einer Lösung von 34 Teilen Natriumhydroxid in 120 Teilen versetzt und 60 Minuten lang gemischt. Nun wird die Lösung von 66 Teilen Phosphorsäure (85 %ig) in 120 Teile Wasser zugegeben und weitere 60 Minuten bei Raumtemperatur gemischt. Das Reaktionsgut wird 3 1/2 Stunden bei 158-160 °C geknetet. Nach der Vermahlung erhält man ein kaltwasserlösliches Produkt.

| Reaktionszeit bei 158-160 °C nach | Viskosität mPas (3 %ig) |
| 60 Minuten | 1 200 |
| 90 Minuten | 2 350 |
| 120 Minuten | 2 800 |
| 150 Minuten | 3 000 |
| 180 Minuten | 2 000 |
| 210 Minuten | 850 |

## Beispiel 11

200 Teile Polysaccharid aus Endospermen von Cassia tora werden in einem Knetmischer vorgelegt und unter laufendem Mischer mit einer Lösung von 25.2 Teilen Mononatriumphosphat und 29.8 Teilen Dinatriumphosphat in 260 Teilen Wasser versetzt und 30 Minuten lang bei Raumtemperatur gemischt. Das Reaktionsgut wird 3 Stunden bei 158-160 °C geknetet. Nach der Vermahlung erhält man ein kaltwasserlösliches Produkt.

| Reaktionszeit bei 158-160 °C nach | Viskosität mPas (3 %ig) |
|---|---|
| 60 Minuten | 1 400 |
| 90 Minuten | 3 150 |
| 120 Minuten | 3 700 |
| 150 Minuten | 3 200 |
| 180 Minuten | 2 300 |

## Beispiel 12

200 Teile Polysaccharid aus Endospermen von Cassia tora werden in einem Knetmischer vorgelegt und unter laufendem Mischer mit einer Lösung von 66 Teilen Phosphorsäure (85 %ig) in 120 Teilen Wasser versetzt und 30 Minuten lang bei Raumtemperatur gemischt. Nun wird die Lösung von 34 Teilen Natriumhydroxid in 120 Teile Wasser zugegeben und weitere 30 Minuten gemischt. Das Reaktionsgut wird 120 Minuten bei 158-160 °C geknetet. Nach der Vermahlung erhält man ein kaltwasserlösliches Produkt mit der Viskosität von 4 500 mPas (3 %ig).

Das bräunliche Produkt wird in einem gut funktionierenden Mischer vorgelegt und mit der Lösung von 5 Teilen Natriumhydroxid, 15 Teilen Wasserstoffperoxid (32 %ig) in 20 Teilen Wasser versetzt und 15 Minuten lang bei Raumtemperatur gemischt. Nach einer Depolymerisationszeit von 120 Minuten bei 80 °C wurde mit Zitronensäuire neutralisiert und im Vakuum getrocknet. Die Viskosität betrug nun 180 mPas (3 %ig).

## Beispiel 13

162 Teile Polysaccharid aus Endospermen von Cassia tora werden in einem Knetmischer vorgelegt und unter laufendem Mischer mit einer Lösung von 16.8 Teilen Natriumhydroxid in 162 Teilen Wasser versetzt. Nach 60-minütigem Mischen bei Raumtemperatur werden 20.2 Teile Methylchlorid zugegeben und der Kneter wird geschlossen. Das Reaktionsgut wird weitere 4 Stunden bei einer Reaktionstemperatur von 70 bis 75 °C gemischt. Das überschüssige Methylchlorid wird mittels Vakuum entfernt und das Produkt wird getrocknet und vermahlen. Das Produkt ist kalt- und warmwasserlöslich und die Viskosität beträgt 18 500 mPas 3 %ig (Brookfield, Modell RVT bei 20 UpM und 20 °C gemessen).

## Beispiel 14

In einem geeigneten Rührgefäß mit Thermometer und Rückflußkühler werden 600 Teile 65 %iges Isopropanol vorgelegt und mit 100 Teilen Mehl aus Endospermen von Cassia tora sowie 20 Teilen Natriumhydroxid in 20 Teilen Wasser unter laufendem Mischer versetzt. Nach 45-minütigem Mischen bei ca. 25 °C werden 33 Teile Methyljodid zugegeben und auf 72 °C geheizt. Das Reaktionsgut wird weitere 5 Stunden bei einer Raumtemperatur von 73 bis 75 °C gemischt. Nun wird das Produkt abfiltriert und der Filterkuchen im Trockenschrank getrocknet. Das pulverförmige Produkt ist kalt- und warmwasserlöslich. Die Viskosität beträgt

a) 6 500 mPas 3 %ig in Leitungswasser
b) 3 800 mPas 3 %ig in 30 %igem Methanol

(Brookfield, Modell RVT bei 20 UpM und 20 °C gemessen)

## Beispiel 15

Mischungen aus Cassia tora-Galaktomannanphosphatester (= PhCaGa) und Xanthangum

In diesem Beispiel wird die durch Synergismus zwischen PhCaGa und Xanthan bewirkte prozentuale Viskositätszunahme demonstriert. Es wurden Mischungen aus 10 bis 90 Gewichtsprozent PhCaGa und entsprechend 90 bis 10 sich zu 100 Prozent ergänzenden Anteilen von Xanthan (Rhodigel 23) hergestellt. Von diesen Mischungen wurden jeweils 3 Teile in 297 Teile Wasser (kalt ca. 20 °C) mit einem Rührer ca. 5 Minuten gerührt und nach 20 Minuten die Viskosität am Brookfield Rotationsviskosimeter RVT bei 20 °C und 20 UpM mit der geeigneten Spindel gemessen. Tabelle I zeigt das Mischungsverhältnis der zwei Komponenten, die theoretisch berechnete (erwartete) Viskosität, die aktuelle (gefundene) Viskosität und die prozentuale Viskositätszunahme.

Tabelle I

Synergismus von Cassia tora-Galaktomannanphosphatester (PhCaGa)/Xanthangum-Mischungen

| Mischung | | Theoret. | Aktuelle | % Zunahme |
|---|---|---|---|---|
| Xanthan | PhCaGa | Visk. (mPas) 1%ig | Visk. (mPas) 1%ig | |
| 100 | 0 | – | 3 060 | – |
| 90 | 10 | 2 763 | 4 170 | 51 % |
| 70 | 30 | 2 169 | . 7 000 | 222 % |
| 60 | 40 | 1 872 | 9 200 | 391 % |
| 50 | 50 | 1 575 | 10 000 | 535 % |
| 40 | 60 | 1 278 | 11 600 | 807 % |
| 30 | 70 | 981 | 10 250 | 945 % |
| 10 | 90 | 387 | 2 575 | 565 % |
| 0 | 100 | – | 90 | – |

Eine Mischung aus 60 Teilen Cassia tora-Galaktomannanphosphatester und 40 Teilen Xanthan wurde hergestellt. Eine 0.5 %ige Lösung dieser Mischung in Wasser bei Raumtemperatur bildete ein Gel, das so eine Gelstruktur aufwies, die das Sinken von Johannisbrotkernen für mindestens 24 Stunden verhinderte.

Beispiel 16

Mischungen aus Hydroxypropylcassia-galaktomannan (= HPCaGa) und Xanthan

In diesem Beispiel wird die durch Synergismus zwischen Hydroxypropylcassia-galaktomannan und Xanthan (Rhodigel 23) bewirkte prozentuale Viskositätszunahme demonstriert. Es wurden Mischungen aus 75 bzw. 50 Gewichtsprozent Hydroxypropylcassia-galaktomannan und entsprechend 25 bzw. 50 Prozent ergänzenden Anteilen von Xanthan hergestellt. Von diesen Mischungen wurden jeweils 3 Teile in 297 Teile Wasser (kalt ca. 20 °C) mit einem Rührer ca. 5 Minuten gerührt und nach 20 Minuten die Viskosität am Brookfield RVT bei 20 °C und 20 UpM mit der geeigneten Spindel gemessen. Tabelle II zeigt die Viskositätszunahme.

Tabelle II

| Mischung | | Theoret. | Aktuelle | % Zunahme |
|---|---|---|---|---|
| Xanthan | HPCaGa | Visk. (mPas) | Visk. (mPas) | |
| 100 | 0 | – | 3 000 | – |
| 50 | 50 | 1 600 | 7 000 | 337 |
| 25 | 75 | 900 | 7 500 | 733 |
| 0 | 100 | – | 200 | – |

Beispiel 17

Mischungen aus Hydroxyäthylcassia-galaktomannan (= HECaGa) und Xanthan

In diesem Beispiel wird die durch Synergismus zwischen Hydroxyäthylcassia-galaktomannan und Xanthan (Rhodigel 23) bewirkte prozentuale Viskositätszunahme demonstriert. Es wurden Mischungen aus 75 bzw. 50 Gewichtsprozent Hydroxyäthylcassia-galaktomannan und entsprechend 25 bzw. 50 Prozent ergänzenden Anteilen von Xanthan hergestellt. Von diesen Mischungen wurden jeweils 3 Teile in 297 Teile Wasser (kalt 20 °C) mit einem Rührer ca. 5 Minuten gerührt und nach 20 Minuten die Viskosität am Brookfield RVT gemessen.

Tabelle III

| Mischung | | Theoret. | Aktuelle | % Zunahme |
|---|---|---|---|---|
| Xanthan | HECaGa | Visk. (mPas) | Visk. (mPas) | |
| 100 | 0 | – | 3 000 | – |
| 50 | 50 | 1 630 | 4 800 | 194 % |
| 25 | 75 | 945 | 5 200 | 450 % |
| 0 | 100 | – | 260 | – |

## Beispiel 18

Mischung aus Carboxymethylcassia-galaktomannan (= CMCaGa) und Xanthan

Es werden verschiedene Mischungen aus Carboxymethylcassia-galaktomannan mit Xanthan angefertigt und 1 %ig in kaltes Wasser eingerührt.

Tabelle IV

| Mischung | | Theoret. | Aktuelle | % Zunahme |
|---|---|---|---|---|
| Xanthan | CMCaGa | Visk. (mPas) | Visk. (mPas) | |
| 100 | 0 | – | 3 000 | – |
| 50 | 50 | 1 545 | 8 500 | 450 % |
| 25 | 75 | 817.5 | 8 000 | 878 % |
| 0 | 100 | – | 90 | – |

## Beispiel 19

Mischung aus Methylcassia-galaktomannan (=MCaGa) mit Xanthan

Es werden verschiedene Mischungen aus Methylcassia-galaktomannan mit Xanthan angefertigt und 1 %ig in kaltes Wasser eingerührt.

Tabelle V

| Mischung | | Theoret. | Aktuelle | % Zunahme |
|---|---|---|---|---|
| Xanthan | MCaGa | Visk. (mPas) | Visk. (mPas) | |
| 100 | 0 | – | 3 000 | – |
| 50 | 50 | 1 650 | 7 000 | 324 % |
| 25 | 75 | 975 | 6 200 | 538 % |
| 0 | 100 | – | 300 | – |

## Beispiel 20

In diesem Beispiel wird die Thermo- und Alkalistabilität der wässrigen Lösung der Mischung aus 75 Teilen Cassia tora-Polygalaktomannan-Derivat und 25 Teilen Xanthangum demonstriert. Von diesen Mischungen wurden jeweils 1.5 Teile in 298.5 Teile eines künstlich hergestellten Meerwassers bestehend aus 96.7 Teilen Leitungswasser, 3 Teilen NaCl, 0.2 Teilen $MgCl_2 \cdot H_2O$ und 1 Teil KCl bei Raumtemperatur mit einem Rührer ca. 5 Minuten eingerührt. Nach 15 Minuten wurde die Viskosität am Brookfield Rotationsviskosimeter bei 20 °C und 100 UpM mit der Spindel 3 gemessen.

Folgende Tabelle zeigt die Viskosität der jeweiligen Mischung bei 20 °C und pH-Wert 7 bzw. 10.7.

| Mischung | Viskosität bei 20°C | |
|---|---|---|
| | pH 7 | pH 10.7 |
| HPCaGa/Xanthan (75:25) | 150 mPas | 145 mPas |
| HECaGa/Xanthan (75:25) | 200 mPas | 200 mPas |
| CMCaGa/Xanthan (75:25) | 40 mPas | 45 mPas |
| MCaGa /Xanthan (75:25) | 120 mPas | 125 mPas |
| PhCaGa/Xanthan (75:25) | 230 mPas | 220 mPas |

Diese Lösungen wurden in Autoklavenflaschen 16 Stunden im Trockenschrank bei 115 °C gelagert und anschließend die Viskosität bei 20 °C gemessen. Vor der Messung wurden die Lösungen 5 Minuten lang am Schnellrührer gerührt.

| Mischung | Viskosität bei 20°C | aktueller pH-Wert |
|---|---|---|
| HPCaGa/Xanthan (75:25) | 280 mPas | 9.1 |
| HECaGa/Xanthan (75:25) | 275 mPas | 9.6 |
| CMCaGa/Xanthan (75:25) | 320 mPas | 9.6 |
| MCaGa /Xanthan (75:25) | 200 mPas | 9.6 |
| PhCaGa/Xanthan (75:25) | 160 mPas | 10.4 |

Beispiel 21

Mischungen aus Hydroxypropylcassia-galaktomannan (=HPCaGa) mit verschiedenen SG (Substitutionsgrad) und Xanthan

In diesem Beispiel wird die durch Synergismus zwischen Hydroxypropylcassia-galaktomannan mit einem SG 0.3 bzw. 0.4 und Xanthan (Rhodigel 23) bewirkte prozentuale Viskositätszunahme in 50 %igem Methanol beschrieben. Es wurden Mischungen aus 75 Gewichtsprozent HPCaGa und entsprechend 25 % ergänzenden Anteilen von Xanthan hergestellt. Von diesen Mischungen wurden jeweils 3 Teile in 297 Teile 50 %igem Methanol (kalt, ca. 20 °C) mit einem Rührer ca. 20 Minuten gerührt und nach 20 Minuten die Viskosität am Brookfield RVT bei 20 °C und 20 UpM mit der geeigneten Spindel gemessen. Tabelle VI zeigt die Viskositätszunahme.

| Xanthan | HPCaGa | | Viskosität in 50%igem Methanol mPas Aktuelle Viskosität | | | Theoret. Viskosität | % Zunahme |
|---|---|---|---|---|---|---|---|
| | SG: 0.3 | SG: 0.4 | 1%ig | 0.5%ig | 0.25%ig | | |
| 100 Teile | - | - | 3 000 | - | - | | |
| 100 Teile | - | - | - | 800 | - | | |
| 100 Teile | - | - | - | - | 200 | | |
| - | 100 Teile | - | 55 | - | - | | |
| - | - | 100 Teile | 110 | - | - | | |
| 25 Teile | 75 Teile | - | 2 500 | - | - | 241 | 938 |
| 25 Teile | - | 75 Teile | 2 000 | - | - | 282 | 609 |

# EP 0 146 911 B1

Die Gelstruktur dieser Gele bleibt stabil auch nach 3 Tagen bei — 20 °C und verhindert das Sinken von z. B. Johannisbrotkernen, Sojabohnen und Kohlegranulat für mindestens 24 Stunden.

## Beispiel 22

Eine Druckpaste zum Bedrucken einer Polyamidauslegware mit geschnittener Schlinge wurde nach folgender Rezeptur hergestellt :

```
    400 g einer 3 %igen Lösung von Hydroxypropylcassia (hergestellt gemäß Beispiel 1)
    450 g Wasser
      3 g C.I. Acid Red 275
     20 g Butyldiglykol
      8 g Alkylarylpolyglykoläther
     12 g Ammonsulfat
      2 g Entschäumer
      y g Ausgleich
  1 000 g
```

Eine zweite Druckpaste wurde anstelle von Hydroxypropylcassia mit einer 3 %igen Lösung von hydroxypropyliertem JBK-Mehl, ansonsten wie oben hergestellt. Die beiden Farbpasten wurden viskositätsgleich eingestellt und auf einer Rotationsdruckmaschine vergleichend auf dem angegebenen Substrat gedruckt. Die Drucke wurden fixiert und fertiggestellt. Die erhaltenen Drucke zeigten eindeutig, daß bei der erfindungsgemäßen Verwendung von Hydroxypropylcassia als Verdickungsmittel in einer Farbpaste bessere Druckresultate erzielt werden als bei Verwendung des JBK-Äthers. Dies zeigt sich in einer besseren Penetration der Druckpaste in das Substrat und einer Reduzierung des Grauschleiers.

## Beispiel 23

Die nach Beispiel 22 bereiteten Druckpasten wurden am Brookfield Viskosimeter RVT (20 UpM, 20 °C) viskositätsgleich auf 3 500 mPas eingestellt.

Beide Pasten wurden am Rotovisco II der Firma Haake vermessen, wobei durch gleichzeitige Messung/Registrierung der Wertepaare Schubspannung/Schergefälle eine sogennante Fließkurve zur Ermittlung der rheologischen Eigenschaften erstellt wurde.

Die aus Hydroxypropyl-Cassia bereitete Paste zeigte « längeres, zügigeres » Fließverhalten gegenüber dem Vergleich.

Hieraus erklärt sich auch die in Beispiel 22 beobachtete bessere Penetration der erfindungsgemäßen Verdickung.

## Beispiel 24

Es wurden Farbpasten zum Spacen von Polyamid-Strickschläuchen nach folgender Rezeptur bereitet :

```
      x g Farbstoff
     15 g Butyldiglykol
     15 g Alkylarylpolyglykoläther
    200 g Verdickung 3 %ig
     12 g Essigsäure 60 %ig
      2 g Entschaümer
      y g Wasser
  1 000 g
```

Als Verdickung wurden vergleichend angesetzt :

1) erfindungsgemäß Hydroxyäthylcassia (hergestellt gemäß Beispiel 2)
2) Hydroxyäthylguar
3) Hydroxyäthyl-JBK

Als Farbstoffe wurden für den Vergleich ausgewählt :

```
Grundfarbe : 2.0 g C.I. Acid Blue 264
             0.2 g C.I. Acid Green 41
Druck 1 :    2.0 g C.I. Acid Black 172
Druck 2 :    6.0 g C.I. Acid Blue 264
             4.0 g C.I. Acid Blue 260
```

Die Farbpasten wurden viskositätsgleich eingestellt. Nach dem Klotzen und Drucken erfolgte die Fixierung der Farbstoffe bei 102 °C 10 Minuten lang in Sattdampf.

Ein Vergleich der Farbausbeute wie auch der späteren Verarbeitbarkeit beim Auftrennen der Strickschläuche ließ zwischen der erfindungsgemäßen Verdickung aus Hydroxyäthylcassia und der Verdickung aus Hydroxyäthyl-JBK keinen Unterschied erkennen. Beide Verdickungen waren jedoch in ihrem Druckausfall oder Verdickung aus Hydroxyäthylguar deutlich überlegen.

### Beispiel 25

Für den Druck mit Dispersionsfarbstoffen auf Polyestergewebe und -gewirke wurden drei Farbpasten nach folgender Rezeptur bereitet :

```
      20 g C.I. Disperse Red 90
      40 g C.I. Disperse Red 54
     600 g Verdickungslösung mit Zitronensäure auf pH 5.2 angesäuert
      12 g Fixierbeschleuniger
       1 g Entschäumer
       y g Ausgleich
   1 000 g Farbpaste
```

Die Verdickungslösung der Farbpaste 1 wurde 5 %ig bereitet und setzte sich wie folgt zusammen : 75 Teile depolymerisierte Hydroxyäthylcassia kombiniert mit 25 Teilen Stärkeäther.

Die Verdickungslösung der Farbpaste 2 bestand aus einer Kombination von 75 Teilen depolymerisiertem Guar mit 25 Teilen Stärkeäther und musste 7 %ig angesetzt werden, um gleiche Viskosität wie Farbpaste 1 aufzuweisen.

Die Verdickungslösung der Farbpaste 3 bestand aus einer Kombination von 75 Teilen alkoxyliertem JBK-Mehl mit wiederum 25 Teilen Stärkeäther. Zur viskositätsgleichen Einstellung mit den Farbpasten 1 und 2 war ein 8 %iger Ansatz erforderlich.

Die vergleichenden Druckabschläge erfolgten auf Flachfilm-, Rotations- und Rouleauxdruckmaschinen. Die Fixierung der Drucke wurde im Heißdampf vorgenommen.

Der Vergleich der Drucke zeigte, daß bezüglich der Penetration und der Egalität die Farbpaste 1 mit ihrer 5 %igen Verdickungslösung auf sämtlichen Druckaggregaten ein gleich gutes, teilweise sogar besseres Resultat erbrachte als die Farbpasten 2 und 3, deren Verdickungslösungen 7 bzw. 8 %ig bereitet werden mussten. In der Farbtiefe und Brillanz wurde die Drucke der Farbpasten 1 und 2 gleich gut beurteilt, demgegenüber fielen die Drucke mit der Farbpaste 3 etwas schwächer aus.

Aus diesem Beispiel geht besonders deutlich hervor, daß man bei Verwendung von Hydroxypropylcassia als Verdickungsmittel bei weitaus geringerer Ansatzkonzentration zu gleich guten — teilweise sogar besseren — Druckresultaten wie bei den im Beispiel beschriebenen körperreicheren Verdickungsmitteln kommt.

### Beispiel 26

Zum Unifärben von Polyamidauslegeware mit geschnittener Schlinge auf einem Färbeaggregat mit Farbauftragswalze wurden nach folgender Rezeptur zwei Farbflotten bereitet :

```
       5 g C.I. Acid Brown 331
     200 g Verdickungslösung 2.5 %
       5 g alkoxyliertes Fettsäureamid
       3 g Essigsäure 60 %
       1 g Entschäumer
     786 g Wasser
   1 000 g Färbeflotte
```

Die Verdickungslösung der Farbflotte 1 wurde mit Hydroxyäthylcassia hergestellt, die Farbflotte 2 aus Hydroxyäthyl-JBK-Mehl. Nach der Fertigstellung der gefärbten Auslegware zeigte sich, daß das mit der Farbflotte 1 gefärbte Substrat einen farbtieferen wie auch brillanteren Ausfall aufwies als das zum Vergleich mit der Farbflotte 2 gefärbte Material.

### Beispiel 27

Eine Druckpaste für den Druck auf Polyacrylnitril mit kationischen Farbstoffen wurde nach folgender Rezeptur bereitet :

35 g C.I. Basic Yellow 11
5 g C.I. Basic Blue 1
600 g Verdickungslösung
20 g Essigsäure 30 %ig
20 g Luprintan PFD (R)
10 g Glyecin A (R)
x g Ausgleich
1 000 g

Die Verdickungslösung bestand
— im Falle A aus
60 Gewichtsteilen depolymerisiertem, kationischen Cassia-Äther (Trimethylammoniumhydroxypropyl-Cassia-Chlorid)
40 Gewichtsteilen British Gum
— im Falle B aus
60 Gewichtsteilen depolymerisiertem Guar
40 Gewichtsteilen British Gum
— im Falle C aus
60 Gewichtsteilen Carboxymethyl-Johannisbrotkernmehl
40 Gewichtsteilen British Gum

Die Druckpasten wurden viskositätsgleich eingestellt und auf Polyacrylnintril-Musselin gedruckt und anschließend bei Sattdampf 30 Minuten fixiert.

Der Druck nach Rezeptur C war stippig, da sich offenbar Agglomerate zwischen kationischem Farbstoff und anionischem Galaktomannan-Äther ergeben hatten.

Gegenüber Rezeptur B zeigte die Rezeptur A den weitaus egaleren und brillanteren Druckausfall.

## Beispiel 28

Mit 25 kg Schlichtemittel Hydroxypropylcassia-galaktomannan gemäß Beispiel 5 und 1.0 kg Schlichtewachs werden im Turbokocher 500 l fertige Schlichteflotte aufbereitet. Auf einer Trommelschlichtmaschine wird folgendes Kettmaterial geschlichtet.

Nm 10/1 Polyacrylnitrilgarn 100 % mit 2 400 Fäden und der Gewebeeinstellung Fäden pro cm 17/17, Garnnummer Nm Kette und Nm Schuß je 10/1.

Die Flottentemperatur beträgt im Schlichtetrog 80 °C. Das Kettgarn wird zweimal getaucht und zweimal abgequetscht. Die Flottenmitnahme beträgt 124 %. Die Kette wird auf Jaquard-Webmaschinen zu Vorhangstoffen verwebt. Der Nutzeffekt liegt bei etwa 94 %.

## Beispiel 29

Aus 35 kg Hydroxypropylcassia-galaktomannan gemäß Beispiel 5 unter Zugabe von zusätzlich 100 g Kaliumpersulfat und 1.5 kg Schlichtefett wurden 450 l fertige Schlichteflotte hergestellt.

Geschlichtet wird nachstehendes Kettmaterial : Nm 64/1 Polyester/Baumwolle im Mischungsverhältnis 50 % : 50 % mit 5 024 Fäden in der Gewebeeinstellung 34/25-64/64.

Als Schlichtemaschine steht eine Trommelschlichtmaschine mit 9 Trockenzylindern zur Verfügung. Die Flottentemperatur beträgt 80 °C. Das Kettgarn wird zweimal in die Flotte getaucht und zweimal abgequetscht mit einem Abquetscheffekt von 129 %. In der Weberei wird eine Nutzleistung von 97 % erreicht. Der Staubanfall sowohl im Trockenteilfeld der Schlichtemaschine als auch in der Weberei ist äußerst gering.

## Beispiel 30

In einem Turbokocher werden mit 35 kg Carboxymethylcassia-galaktomannan gemäß Beispiel 3, 150 g Kaliumpersulfat und 0.5 kg Schlichtefett 450 l fertige Schlichteflotte hergestellt. Es wird nachstehendes Kettmaterial geschlichtet : Nm 70/1 Baumwolle, vorgesehen für Inlettgewebe, mit 6 580 Fäden in der Gewebeeinstellung 47/42-70/70.

Als Schlichtmaschine steht eine Trommelschichtmaschine mit 9 Trockenzylindern und 2 Schlichtetrögen zur Verfügung. Die Flottentemperatur beim Schlichten beträgt 80-85 °C. Das Kettgarn wird zweimal in der Flotte getaucht und zweimal abgequetscht mit einem Abquetscheffekt von 134 %. In der Weberei wird eine Nutzleistung von 97 % erreicht.

## Patentansprüche

1. Substituierte $C_1$-$C_4$-Alkyläther sowie Phosphorsäureester von Cassia tora-Polygalaktomannanen.

2. Carboxy-$C_{1-4}$-alkyläther, Hydroxy-$C_{1-4}$-alkyläther und Tri-$C_{1-4}$-alkylammonium-hydroxy-$C_{1-4}$-alkyläther von Cassia tora-Polygalaktomannanen.

3. Hydroxypropyläther von Cassia tora-Polygalaktomannanen.

4. Äther und Ester nach einem der Ansprüche 1-3, dadurch gekennzeichnet, daß sie einen Substitutionsgrad von 0,03 bis 3,0, vorzugsweise von 0,1 bis 0,5 aufweisen.

5. Äther und Ester nach einem der Ansprüche 1-4, dadurch gekennzeichnet, daß sie eine Viskosität von 100 bis 40 000 mPas (3 Gew.-% in Wasser, Brookfield RVT bei 20 UpM und 20 °C) aufweisen.

6. Äther und Ester nach einem der Ansprüche 1-5, dadurch gekennzeichnet, daß sie in depolymerisierter Form vorliegen.

7. Verfahren zur Herstellung der Verbindungen gemäß einem der Ansprüche 1-6, dadurch gekennzeichnet, daß man Cassia tora-Galaktomannan mit Alkylenoxiden, Acrylnitril, Halogenfettsäurederivaten, eine Epoxyalkyl- oder Halogenhydringruppe enthaltenden quaternären Ammoniumverbindungen, Phosphorsäure oder einem Alkali- oder Ammoniumsalz der Phosphorsäure in an sich bekannter Weise umsetzt und gegebenenfalls anschließend in an sich bekannter Weise, beispielsweise mit einem Peroxyd, partiell depolymerisiert.

8. Verwendung der Verbindungen gemäß einem der Ansprüche 1 bis 6 als Textilhilfsmittel.

9. Verwendung der Verbindungen nach einem der Ansprüche 1-6 als Verdickungsmittel.

10. Verwendung gemäß Anspruch 9 als Verdickungsmittel in Druckpasten für den Textildruck und beim Kontinuefärben textiler Substrate.

11. Verwendung gemäß einem der Ansprüche 8-10 in Kombination mit anderen Polysaccharidabkömmlingen.

12. Verwendung gemäß Anspruch 11 in Kombination mit Xanthan, Carragheenan und/oder Polymerisaten bzw. Mischpolymerisaten der Acrylsäure (-Salze).

13. Verwendung gemäß einem der Ansprüche 8-12 zur Verhinderung des Absinkens fester Körper in wäßrigen bzw. wäßrig/alkoholischen Suspensionen.

## Claims

1. Substituted $C_1$-$C_4$-alkyl ethers and phosphoric acid esters of Cassia tora-polygalactomannans

2. Carboxy-$C_{1-4}$-alkyl ethers, hydroxy-$C_{1-4}$-alkyl ethers and tri-$C_{1-4}$-alkylammonium-hydroxy-$C_{1-4}$-alkyl ethers of Cassia tora-polygalactomannans.

3. Hydroxypropyl ethers of Cassia tora-polygalactomannans.

4. Ethers and esters according to one of claims 1-3, characterized in that they have a degree of substitution of 0.03 to 3.0, preferably of 0.1 to 0.5.

5. Ethers and esters according to one of claims 1-4, characterized in that they have a viscosity of 100 to 40,000 mPas (3 % by weight in water, Brookfield RVT at 20 rpm and 20 °C).

6. Ethers and esters according to one of claims 1-5, characterized in that they are in depolymerized form.

7. Process for the preparation of compounds according to one of claims 1-6, characterized in that Cassia tora-galactomannan is reacted with alkylene oxides, acrylonitrile, halogeno-fatty acid derivatives, quarternary ammonium compounds containing an epoxyalkyl or halogenohydrin group, phosphoric acid or an alkali metal or ammonium salt of phosphoric acid in a manner which is known per se, and if appropriate the products are then partly depolymerized in a manner which is known per se, for example with a peroxide.

8. Use of the compounds according to one of claims 1 to 6 as textile auxiliaries.

9. Use of the compounds according to one of claims 1-6 as thickening agents.

10. Use according to claim 9 as thickening agents in printing pastes for textile printing and in the continuous dyeing of textile substrates.

11. Use according to one of claims 8-10 in combination with other polysaccharide derivatives.

12. Use according to claim 11 in combination with xanthan, carrageenan and/or polymers or copolymers of acrylic acid (salts).

13. Use according to one of claims 8-12 for preventing the sinking of solid bodies in aqueous or aqueous/alcoholic suspensions.

## Revendications

1. $C_1$-$C_4$-alkyléthers substitués ainsi qu'esters d'acide phosphorique de polygalactomannanes de Cassia tora.

2. Carboxy-$C_{1-4}$-alkyléthers, hydroxy-$C_{1-4}$-alkyléthers et tri-$C_{1-4}$-alkylammonium-hydroxy-$C_{1-4}$-alkyléthers de polygalactomannanes de Cassia tora.

3. Hydroxypropyléthers de polygalactomannanes de Cassia tora.

4. Ethers et esters selon l'une quelconque des revendications 1 à 3, caractérisés en ce qu'ils présentent un degré de substitution de 0,03 à 3,0, de préférence de 0,1 à 0,5.

5. Ethers et esters selon l'une quelconque des revendications 1 à 4, caractérisés en ce qu'ils présentent une viscosité de 100 à 40 000 mPa·s (à 3 % en poids dans l'eau, viscosimètre de Brookfield RVT à 20 tr/mn et à 20 °C).

6. Ethers et esters selon l'une quelconque des revendications 1 à 5, caractérisés en ce qu'ils se présentent sous forme dépolymérisée.

7. Procédé de préparation des composés selon l'une quelconque des revendications 1 à 6, caractérisé en ce qu'on fait réagir, de façon connue en soi, un galactomannane de Cassia tora avec des oxydes d'alkylène, l'acrylonitrile, des dérivés d'acides gras halogénés, des composés d'ammonium quaternaires contenant un groupement époxyalkyle ou halogénhydrine, l'acide phosphorique ou un sel alcalin ou ammonique de l'acide phosphorique puis, le cas échéant, on dépolymérise partiellement le produit obtenu, par exemple avec un peroxyde, de façon connue en soi.

8. Utilisation des composés selon l'une quelconque des revendications 1 à 6 comme produit auxiliaire pour textiles.

9. Utilisation des composés selon l'une quelconque des revendications 1 à 6 comme épaississant.

10. Utilisation selon la revendication 9 comme épaississant dans des pâtes d'impression pour l'impression de textiles et dans la teinture en continu de substrats textiles.

11. Utilisation selon l'une quelconque des revendications 8 à 10 en combinaison avec d'autres dérivés de polyosides.

12. Utilisation selon la revendication 11 en combinaison avec le xanthane, le carraghenane et/ou des produits de polymérisation ou de copolymérisation de l'acide acrylique (ou de ses sels).

13. Utilisation selon l'une quelconque des revendications 8 à 12 pour empêcher le dépôt de corps solides dans des suspensions aqueuses ou hydroalcooliques.